# EUROPÄISCHE PATENTSCHRIFT

(11) **EP 3 439 147 B1**
(45) Veröffentlichungstag und Bekanntmachung des Hinweises auf die Patenterteilung: **24.02.2021**
(21) Anmeldenummer: 18178553.6
(22) Anmeldetag: 19.06.2018
(51) Int. Cl.: H02K 1/32, H02K 9/19, H02K 9/20, H02K 17/16, H02K 1/24, H02K 3/24

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 01.08.2017 DE 102017213227
(43) Veröffentlichungstag der Anmeldung: 06.02.2019
(73) Patentinhaber: AUDI AG, 85045 Ingolstadt (DE)
(72) Erfinder: Weber, Korbinian, 85049 Ingolstadt (DE)

(56) Entgegenhaltungen:
- EP-A1- 0 012 318
- EP-A1- 2 498 386
- EP-A1- 2 509 196
- WO-A1-01/20713
- CN-A- 104 578 504
- DE-A1- 2 052 839
- DE-A1- 4 230 379
- DE-A1-102012 203 691
- DE-A1-102013 020 331
- DE-A1-102014 214 136
- DE-A1-102014 215 645
- JP-A- H0 279 749
- JP-A- H01 138 948
- US-A- 4 976 308
- US-B2- 9 065 313
- RON KEMP: "THE HEAT PIPE- a new tune on an old pipe", ELECTRONICS & POWER,, vol. 19, no. 14, 1 August 1973 (1973-08-01), pages 325-326, XP001453944,

## Beschreibung

Die Erfindung betrifft eine elektrische Maschine mit einer Rotorwelle, einem drehfest mit der Rotorwelle gekoppelten Wicklungsträger und wenigstens einer an dem Wicklungsträger angeordneten Wicklung oder einem an dem Wicklungsträger angeordneten Kurzschlusskäfig. Daneben betrifft die Erfindung eine elektrische Maschine und ein Kraftfahrzeug.

In Kraftfahrzeugen werden zunehmend elektrische Maschinen als Antriebsmaschinen genutzt. Hierbei und auch in anderen Anwendungsbereichen von elektrischen Maschinen ist die Leistungsfähigkeit, speziell die Dauerleistungsfähigkeit, der elektrischen Maschine in vielen Fällen dadurch begrenzt, dass nicht ausreichend viel Wärme vom Rotor abgeführt werden kann. Hierbei soll grundsätzlich erreicht werden, Verlustwärme, die primär im Rotor-Blechpaket und bei Asynchronmaschinen im Kurzschlusskäfig bzw. bei fremderregten Synchronmaschinen in der Rotorwicklung entsteht, aus dem rotierenden Rotor nach außen abzuführen. Eine Kühlung kann beispielsweise über das den Rotor umgebende Gas erfolgen. Hierbei ist die Menge der abführbaren Energie jedoch stark begrenzt.

Es ist daher bekannt, den Rotor alternativ oder zusätzlich über eine Rotorinnenkühlung zu kühlen, bei der ein Kühlfluid durch die rotierende Welle des Rotors geführt wird, um einen Wärmetransport über die Rotorwelle zu öffnen. Ein ähnlicher Ansatz wird auch in der Druckschrift DE 42 30 379 A1 genutzt, die vorschlägt, die Rotorwelle als Wärmerohr auszubilden. Hierbei ist in der Rotorwelle ein koaxialer Hohlraum vorgesehen, der sich über die gesamte Länge des Rotorblechs und zumindest einseitig hierüber hinaus erstreckt. Der Hohlraum ist allseitig geschlossen und teilweise flüssigkeitsgefüllt. Problematisch an einer Kühlung über die Rotorwelle ist, dass ein Großteil der abzuführenden Abwärme beabstandet von der Rotorwelle entsteht. Die abführbare Wärmemenge ist somit durch die Wärmeleitfähigkeit des Blechpakets begrenzt Die Druckschrift DE 20 52 839 betrifft eine Anordnung zur Kühlung eines Läuferkäfigs von elektrischen Asynchronmaschinen.

Der Erfindung liegt somit die Aufgabe zugrunde, eine demgegenüber verbesserte Rotorkühlung anzugeben.

Die Aufgabe wird erfindungsgemäß durch einen Rotor nach Anspruch 1 gelöst, wobei der Rotor wenigstens ein gewinkelt, insbesondere senkrecht, zu der Rotorwelle verlaufendes Wärmerohr umfasst.

Erfindungsgemäß wird somit vorgeschlagen, die Wärmeleitfähigkeit in einer Richtung gewinkelt zu der Rotorwelle, also insbesondere in Radialrichtung des Rotors, zu verbessern, indem wenigstens ein gewinkelt zu der Rotorwelle verlaufendes Wärmerohr vorgesehen wird. Da die thermische Leitfähigkeit von Wärmerohren um ein Vielfaches höher ist als die thermische Leitfähigkeit gängiger metallischer Werkstoffe, können bereits relativ wenige und kleine Wärmerohre den radialen Wärmetransport im Rotor deutlich verbessern. Hierdurch kann, insbesondere bei einer rotorwellenseitigen Kühlung des Rotors, eine deutliche Erhöhung der Kühlleistung erreicht werden, womit auch die Leistungsfähigkeit und insbesondere die Dauerleistung einer elektrischen Maschine, die einen solchen Rotor nutzt, erhöht werden kann.

Das Wärmerohr weist ein dicht abgeschlossenes Volumen auf, in dem sich ein Fluid befindet, das im Rahmen des Wärmetransports einen Phasenübergang durchführen kann. An einem zu kühlenden Ende kann das Fluid verdampft werden und an einem gekühlten Ende wieder kondensieren. Das kondensierte Fluid kann durch Kapillarkräfte, beispielsweise bei Verwendung einer Heatpipe als Wärmerohr, transportiert werden, jedoch auch durch die Schwerkraft, beispielsweise bei einem Thermosiphon. Bei einer Nutzung eines Wärmerohrs in einem Rotor kann auch die Zentrifugalkraft zum Transport des kondensierten Fluids genutzt werden, wenn Wärme durch das Wärmerohr zu der Rotorwelle geführt werden soll. In diesem Fall kondensiert das Fluid im Bereich der Rotorwelle und kann durch die Zentrifugalkraft vom Rotor weggeführt werden.

Die Wicklung bzw. der Kurzschlusskäfig wird aus einem leitfähigen Material gebildet. Die Wicklung kann als Spule aufgebracht sein. Insbesondere können mehrere Spulen an dem Wicklungsträger angeordnet sein, beispielsweise um einen fremdangeregten Rotor für eine Synchronmaschine zu bilden. Die Wicklung wird auch in Form eines Käfigs als sogenannte Käfigwicklung ausgebildet. Hierbei werden mehrere Stäbe genutzt, die an den Stirnseiten des Rotors leitend miteinander verbunden werden, um sie kurzzuschließen. Entsprechende Käfige werden insbesondere für Asynchronmaschinen genutzt. Die Bezeichnungen Wicklung und Kurzschlusskäfig können somit austauschbar verwendet werden.

Der Wicklungsträger kann durch ein Blechpaket gebildet sein. Das Blechpaket kann durch ein Stapeln von gegeneinander isolierten Blechen gebildet sein. Das Blechpaket kann vorzugsweise mehrere in Axialrichtung verlaufende Ausnehmungen oder Nuten für Stäbe eines Käfigs und/oder Spulen, die um Zähne des Wicklungsträgers gewickelt sind, aufweisen.

Das Wärmerohr kann sich in die Radialrichtung des Rotors erstrecken. Hierdurch kann ein besonders effizienter Wärmetransport in Radialrichtung des Rotors erreicht werden. Es kann jedoch auch vorteilhaft sein, dass das Wärmerohr oder wenigstens eines der Wärmerohre gegenüber der Radialrichtung geneigt ist, beispielsweise um maximal 5° oder maximal 10°.

Die Rotorwelle umfasst einen von einem Kühlfluid durchströmbaren Hohlraum und/oder ein weiteres Wärmerohr, der oder das sich zumindest abschnittsweise in die Längsrichtung der Rotorwelle erstreckt. Hierdurch kann Wärme axial über die Rotorwelle abgeführt werden. Der Hohlraum bzw. das Wärmerohr kann sich zumindest einseitig über den Wicklungsträger hinaus erstrecken. Die Längsrichtung der Rotorwelle kann der Drehachse des Rotors entsprechen, wenn diese in einer elektrischen Maschine genutzt wird. Sie entspricht somit der Axialrichtung des Rotors bzw. der elektrischen Maschine.

Ein rotorwellenseitiges Ende des Wärmerohrs oder wenigstens eines der Wärmerohre kontaktiert das weitere Wärmerohr direkt oder über ein Wärmeleitmittel und/oder grenzt an den Hohlraum oder ragt in diesen hinein. Hierdurch wird eine besonders gute thermische Kopplung zwischen dem Wärmerohr und dem weiteren Wärmerohr bzw. dem Wärmerohr und dem Kühlfluid erreicht. Als Wärmeleitmittel kann ein Mittel genutzt werden, das eine höhere Wärmeleitfähigkeit als der Wicklungsträger aufweist. Es ist jedoch auch möglich, eine dünne Schicht beispielsweise aus einer Wärmeleitpaste oder einem wärmeleitfähigen Verguss zu nutzen, die primär zum Ausgleich von Unebenheiten des Wärmerohrs bzw. des weiteren Wärmerohrs und somit zur Vermeidung von Lufttaschen dient. Hierbei ist es ausreichend, wenn die Wärmeleitfähigkeit des Wärmeleitmittels höher ist als die Wärmeleitfähigkeit von Luft. Unter einem Kontakt des Wärmerohrs und des weiteren Wärmerohrs ist insbesondere ein mechanischer Kontakt bzw. eine Berührung dieser beiden Elemente zu verstehen, wodurch eine gute thermische Kopplung erreicht werden kann.

Bei der Nutzung des Rotors in einer elektrischen Maschine können beispielsweise aufgrund der auftretenden magnetischen Felder und/oder Drehzahlen große Kräfte auf den Wicklungsträger wirken. Daher sollte eine Schwächung des Wicklungsträgers durch das Einbringen des wenigstens einen Wärmerohrs vermieden werden, wobei gleichzeitig eine Anordnung des Wärmerohrs nahe an kühlungsrelevanten Komponenten erreicht werden soll. Verschiedene Möglichkeiten hierfür werden im Folgenden disktuiert:
Das Wärmerohr oder wenigstens eines der Wärmerohre wird entlang einer axialen Stirnfläche des Wicklungsträgers geführt. Beispielsweise kann es an einer flachen axialen Stirnfläche anliegen oder in einer Ausnehmung des Wicklungsträgers geführt sein. Durch die stirnseitige Anordnung wird eine Schwächung des Wicklungsträgers vermieden. Es ist insbesondere möglich, dass an beiden Stirnseiten des Wicklungsträgers jeweils wenigstens ein Wärmerohr angeordnet ist.

Der Wicklungsträger kann als Spulen ausgebildete Wicklungen tragen, wobei Wicklungsköpfe der Spulen in Axialrichtung des Rotors über den Wicklungsträger hinausragen, wobei ein rotorwellenabgewandtes Ende des Wärmerohrs oder wenigstens eines der Wärmerohre in Umfangsrichtung des Rotors zwischen den Wicklungsköpfen von jeweils zwei der Spulen angeordnet ist. Vorzugsweise kann das rotorwellenabgewandte Ende des jeweiligen Wärmerohrs wenigstens eine der benachbarten Spulen direkt oder über ein Wärmeleitmittel oder einen wärmeleitfähigen Verguss kontaktieren. Die Wicklungsköpfe können jene Bereiche der Spulen sein, in denen der Spulendraht in Umfangsrichtung des Rotors um die axialen Enden von Zähnen des Wicklungsträgers geführt wird. Das vorgeschlagene Vorgehen ermöglicht es, Wärme direkt von den Spulen abzuführen, ohne dass der Wicklungsträger geschwächt werden muss.

Der Kurzschlusskäfig wird durch mehrere an den Stirnseiten des Wicklungsträgers durch Kurzschlussringe kurzgeschlossene Stäbe gebildet, wobei ein rotorwellenabgewandtes Ende des Wärmerohrs oder wenigstens eines der Wärmerohre einen Kurzschlussring direkt oder über ein Wärmeleitmittel oder eine Lötverbindung kontaktiert und/oder in einer Ausnehmung eines Kurzschlussrings aufgenommen ist. Das Wärmerohr kann insbesondere außerhalb des Wicklungsträgers von der Rotorwelle zu dem Kurzschlussring geführt sein. Es kann somit eine Schwächung des Wicklungsträgers vermieden werden und zugleich Wärme von dem Kurzschlussring bzw. von den mit dem Kurzschlussring verbundenen Stäben abgeführt werden.

Die Wicklung oder der Kurzschlusskäfig wird zumindest abschnittsweise in wenigstens einer Ausnehmung des Wicklungsträgers geführt, wobei ein rotorwellenabgewandtes Ende des Wärmerohrs oder wenigstens eines der Wärmerohre an die Ausnehmung angrenzt oder in sie hinein ragt. In zumindest einem Abschnitt der Ausnehmung kann das Wärmerohr, insbesondere flächig, zwischen der Ausnehmungswand und der Wicklung bzw. dem Kurzschlusskäfig oder zwischen zwei benachbarten Wicklungen angeordnet sein. Die Ausnehmung kann eine axial verlaufende Nut sein, in der beispielsweise eine Zahnspule als Wicklung geführt ist. Die Ausnehmung kann jedoch auch eine Ausnehmung für einen Kurzschlussstab eines Käfigs sein. Durch die Führung des Wärmerohrs zu der bzw. in die Ausnehmung kann besonders effizient Wärme von einer der dort geführten Wicklung bzw. dem Kurzschlusskäfig abgeführt werden.

Das Wärmerohr kann sich an dem rotorwellenabgewandten Ende in eine erste Richtung senkrecht zu der Längsrichtung des Wärmerohrs weiten und/oder in eine zweite Richtung senkrecht zu der Längsrichtung und zu der ersten Richtung verengen. Die erste Richtung kann insbesondere die Axialrichtung des Rotors bzw. der elektrischen Maschine sein. Die zweite Richtung kann insbesondere die Umfangsrichtung des Rotors sein. Das Weiten bzw. die Verengung kann insbesondere in jenem Abschnitt des Wärmerohrs erfolgen, der in die Ausnehmung des Wicklungsträgers, die die Wicklung bzw. den Kurzschlusskäfig zumindest abschnittsweise führt, hineinragt.

Neben dem erfindungsgemäßen Rotor betrifft die Erfindung eine elektrische Maschine mit einem Stator, die einen erfindungsgemäßen Rotor umfasst.

Zudem betrifft die Erfindung ein Kraftfahrzeug, das eine erfindungsgemäße elektrische Maschine aufweist.

Die erfindungsgemäße elektrische Maschine und das erfindungsgemäße Kraftfahrzeug können mit Merkmalen, die zum erfindungsgemäßen Rotor diskutiert wurden, weitergebildet werden und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1 bis 6: verschiedene Ausführungsbeispiele erfindungsgemäßer Rotoren, und
- Fig. 7: ein Ausführungsbeispiel eines erfindungsgemäßen Kraftfahrzeugs, das ein Ausführungsbeispiel einer erfindungsgemäßen elektrischen Maschine umfasst.

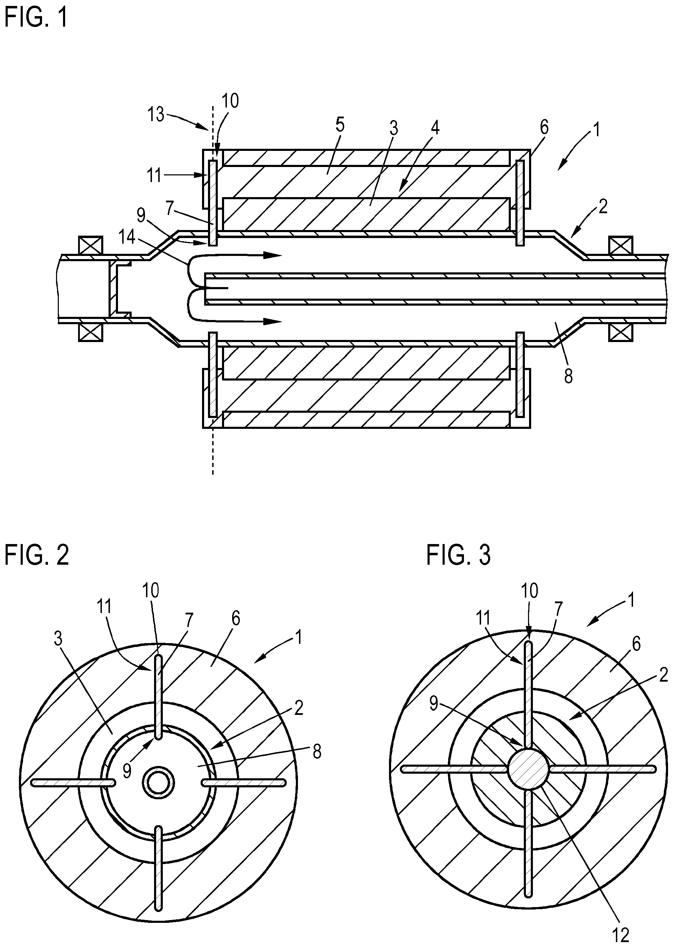

Fig. 1 zeigt einen Rotor 1 für eine elektrische Maschine. Ein Schnitt entlang der gestrichelten Linie 13 ist in Fig. 2 dargestellt. Der Rotor umfasst einen Wicklungsträger 3, beispielsweise ein Blechpaket, der drehfest an einer Rotorwelle 2 angeordnet ist. Der Wicklungsträger 3 trägt als Wicklung einen Kurzschlusskäfig 4, der durch mehrere Stäbe 5 gebildet ist, die in axialen Ausnehmungen des Wicklungsträgers 3 angeordnet sind. Die Stäbe 5 sind an den Stirnseiten des Wicklungsträgers 3 durch Kurzschlussringe 6 verbunden. Ein entsprechender Rotoraufbau ist insbesondere aus dem Bereich der Asynchronmaschinen bekannt und soll nicht detailliert erläutert werden.

Bei der Nutzung des Rotors 1 in einer elektrischen Maschine erwärmt sich der Rotor insbesondere im Bereich der Wicklung bzw. des Kurzschlusskäfigs 4 sowie im Randbereich des Blechpakets, da in diesem durch Wechselfelder Wirbelströme induziert werden können. Aufgrund dieser Erwärmung kann die Leistungsfähigkeit einer elektrischen Maschine eingeschränkt sein. Es ist daher vorteilhaft, den Rotor 1 zu kühlen. Hierzu ist im Rotor 1 eine rotorwellenseitige Kühlung vorgesehen, bei der die Rotorwelle 2 einen von einem Kühlfluid durchströmbaren Hohlraum 8 aufweist, um axial Wärme aus dem Rotor 1 abzutransportieren. Um die thermische Kopplung des Käfigs und der randseitigen Bereiche des Wicklungsträgers 3 mit dieser Kühlung zu verbessern, weist der Rotor 1 mehrere Wärmerohre 7 auf, die gewinkelt zu der Rotorwelle 2 stehen. Im gezeigten Beispiel stehen die Wärmerohre 7 senkrecht auf der Rotorwelle und verlaufen somit in die Radialrichtung des Rotors.

Um eine Schwächung des Wicklungsträgers 3 durch ein Einbringen der Wärmerohre 7 zu vermeiden, werden diese an den Stirnflächen des Wicklungsträgers 3 angeordnet. Im gezeigten Beispiel sind die Wärmerohre 7 von diesen Stirnflächen beabstandet, prinzipiell können sie jedoch auch auf den Stirnflächen aufliegen oder an diesen, beispielsweise durch Rillen, geführt sein.

Das rotorwellenseitige Ende 9 des Wärmerohrs ragt in den Hohlraum 8 hinein und wird somit von dem durch die Pfeile 14 angedeuteten Strom des Kühlfluids umströmt. Hierdurch wird ein besonders effizienter Wärmeaustausch zwischen dem Wärmerohr 7 und dem Kühlfluid erreicht. In einem alternativen Ausführungsbeispiel können die Wärmerohre 7 auch nur an dem Hohlraum 8 angrenzen. Dies wäre für einen guten thermischen Kontakt ebenfalls ausreichend.

Das rotorwellenabgewandte Ende 10 des Wärmerohrs 7 greift in eine Ausnehmung 11 des Kurzschlussrings 6 ein. Hierdurch kann die Wicklung bzw. der Kurzschlusskäfig 4 direkt gekühlt werden und auch die Kühlung der randseitigen Bereiche des Wicklungsträgers 3 wird verbessert.

Fig. 3 zeigt eine geringfügige Abwandlung des in Fig. 1 und Fig. 2 dargestellten Rotors 1. Um einen axialen Wärmetransport zu ermöglichen wird in diesem Ausführungsbeispiel statt dem in Fig. 1 und 2 genutzten, von einem Kühlfluid durchströmbaren Hohlraum 8 ein weiteres Wärmerohr 12 genutzt, das sich entlang zumindest eines Abschnitts der Rotorwelle 2 erstreckt, wobei es vorzugsweise wenigstens einseitig über den Wicklungsträger 3 hinausragt. Um eine gute thermische Kopplung zwischen den Wärmerohren 7 und dem weiteren Wärmerohr 12 zu ermöglichen, kontaktieren die Wärmerohre 7 das weitere Wärmerohr 12 mechanisch, wobei zur Verbesserung der thermischen Kopplung ein Wärmeleitmittel, beispielsweise eine Wärmeleitpaste, genutzt werden kann.

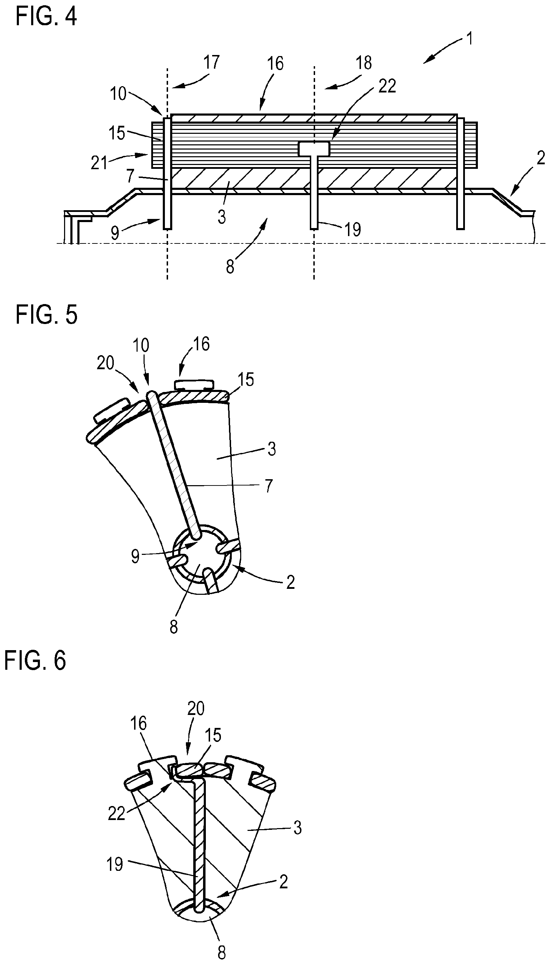

Fig. 4 zeigt ein weiteres Ausführungsbeispiel eines Rotors 1, wobei der Wicklungsträger 3 in diesem Ausführungsbeispiel mehrere Wicklungen 15 trägt, die als Zahnspulen ausgebildet sind. Um den Aufbau des Rotors 1 zu verdeutlichen, zeigt Fig. 5 einen Schnitt entlang der gestrichelten Linie 17. Der Spulendraht wird axial durch nutförmige Ausnehmungen 20 geführt, die zwischen den Zähnen 16 angeordnet sind, um die die Wicklungen 15 gewunden sind. Wie bereits in den vorangehend erläuterten Ausführungsbeispielen sind an den Stirnseiten des Wicklungsträgers 3 die Wärmerohre 7 vorgesehen.

Das rotorwellenseitige Ende 9 der Wärmerohre 7 endet in einem von Kühlfluid durchströmbaren Hohlraum 8 der Rotorwelle 2. Das rotorwellenabgewandte Ende 10 der Wärmerohre 7 ist jeweils zwischen den Wicklungsköpfen 21, also jenen Bereichen der Wicklungen 15, die axial über die Zähne 16 hinausstehen, angeordnet. Hierdurch kann eine effiziente Kühlung der Wicklungen 15 erreicht werden.

Zur verbesserten Kühlung der Wicklung 15 ist ergänzend das Wärmerohr 19 vorgesehen, das den Wicklungsträger 3 durchsetzt. Zur Verdeutlichung der Anordnung des Wärmerohrs 19 zeigt Fig. 6 einen Schnitt entlang der gestrichelten Linie 18. Das rotorwellenabgewandte Ende 22 des Wärmerohrs 19 ragt in die Ausnehmung 20 zwischen den Zähnen 16 hinein, in der die Wicklungen 15 geführt sind. Um einerseits wenig Raum in der Ausnehmung 20 zu verbrauchen und andererseits eine möglichst große Fläche zum Wärmeaustausch mit den Wicklungen 15 bereitzustellen, ist das Ende 22, wie in Fig. 4 zu erkenne ist, geweitet. Wie in Fig. 6 zu erkennen ist, ist das Wärmerohr 19 an seinem Ende 22 zudem in Umfangsrichtung des Rotors 1 verengt.

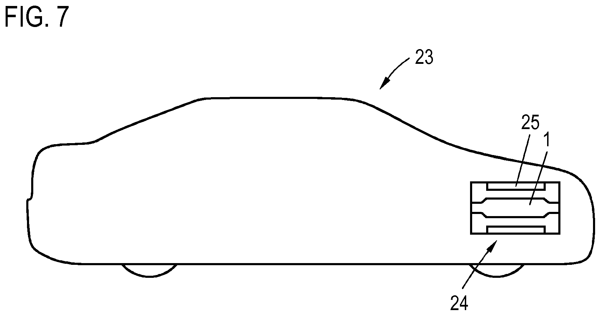

Fig. 7 zeigt ein Kraftfahrzeug 23, das eine elektrische Maschine 24 umfasst, die durch einen Stator 25 und einen in dem Stator 25 drehbar gelagerten Rotor 1 gebildet wird. Der Rotor 1 kann beispielsweise aufgebaut werden, wie es anhand der vorangehenden Figuren erläutert wurde. Durch die Nutzung von Wärmerohren, die gewinkelt zur Rotorwelle 2 des Rotors 1, insbesondere axial bezüglich des Rotors, verlaufen, kann der Wärmeabtransport von dem Rotor erheblich verbessert werden, womit insgesamt die Leistungsfähigkeit der elektrischen Maschine 24 verbessert werden kann. Dies ist besonders relevant, wenn die elektrische Maschine 24 als Antriebsmotor des Kraftfahrzeugs 23 genutzt wird.

## Patentansprüche

1. Rotor für eine elektrische Maschine (24), mit einer Rotorwelle (2) und einem drehfest mit der Rotorwelle (2) gekoppelten Wicklungsträger (3), wobei der Rotor (1) wenigstens ein gewinkelt zu der Rotorwelle (2) verlaufendes Wärmerohr (7, 19) umfasst, wobei in einer ersten Alternative wenigstens eine Wicklung (15) an dem Wicklungsträger (3) angeordnet ist und das Wärmerohr (7) oder wenigstens eines der Wärmerohre (7) entlang einer axialen Stirnfläche des Wicklungsträgers (3) geführt ist, oder in einer zweiten Alternative ein Kurzschlusskäfig (4) an dem Wicklungsträger (3) angeordnet ist, der durch mehrere an den Stirnseiten des Wicklungsträgers (3) durch Kurzschlussringe (6) kurzgeschlossene Stäbe (5) gebildet ist, wobei ein rotorwellenabgewandtes Ende (10) des Wärmerohrs (7) oder wenigstens eines der Wärmerohre (7) einen Kurzschlussring (6) direkt oder über ein Wärmeleitmittel kontaktiert und/oder in einer Ausnehmung (11) eines Kurzschlussrings (6) aufgenommen ist, wobei sowohl in der ersten als auch in der zweiten Alternative die Rotorwelle (2) einen von einem Kühlfluid durchströmbaren Hohlraum (8) und/oder ein weiteres Wärmerohr (12) umfasst, der oder das sich zumindest abschnittsweise in die Längsrichtung der Rotorwelle (2) erstreckt, so dass Wärme axial über die Rotorwelle (2) abgeführt wird, wobei ein rotorwellenseitiges Ende (9) des Wärmerohrs (7, 19) oder wenigstens eines der Wärmerohre (7, 19) das weitere Wärmerohr (12) direkt oder über ein Wärmeleitmittel kontaktiert und/oder an den Hohlraum (8) grenzt oder in diesen hineinragt.

2. Rotor nach Anspruch 1,
**dadurch gekennzeichnet,**
**dass** in der zweiten Alternative das Wärmerohr (7) oder wenigstens eines der Wärmerohre (7) entlang einer axialen Stirnfläche des Wicklungsträgers (3) geführt ist.

3. Rotor nach Anspruch 1 oder 2,
**dadurch gekennzeichnet,**
**dass** sich das Wärmerohr (7, 19) in die Radialrichtung des Rotors (1) erstreckt.

4. Rotor nach einem der vorangehenden Ansprüche,
**dadurch gekennzeichnet,**
**dass** der Wicklungsträger (3) als Spulen ausgebildete Wicklungen (15) trägt, wobei Wicklungsköpfe (21) der Spulen in Axialrichtung des Rotors (1) über den Wicklungsträger (3) hinausragen, wobei ein rotorwellenabgewandtes Ende (10) des Wärmerohrs (7) oder wenigstens eines der Wärmerohre (7) in Umfangsrichtung des Rotors (1) zwischen den Wicklungsköpfen (21) von jeweils zwei der Spulen angeordnet ist.

5. Rotor nach einem der vorangehenden Ansprüche,
**dadurch gekennzeichnet,**
**dass** die Wicklung (15) oder der Kurzschlusskäfig (4) zumindest abschnittsweise in wenigstens einer Ausnehmung (20) des Wicklungsträgers (3) geführt ist, wobei ein rotorwellenabgewandtes Ende (22) des Wärmerohrs (19) oder wenigstens eines der Wärmerohre (19) an die Ausnehmung (20) angrenzt oder in diese hineinragt.

6. Rotor nach einem der vorangehenden Ansprüche,
**dadurch gekennzeichnet,**
**dass** sich das Wärmerohr (19) an dem rotorwellenabgewandten Ende (22) in eine erste Richtung senkrecht zu der Längsrichtung des Wärmerohrs (19) weitet und/oder in eine zweite Richtung senkrecht zu der Längsrichtung und zu der ersten Richtung verengt.

7. Elektrische Maschine mit einem Stator (25),
**dadurch gekennzeichnet,**
**dass** sie einen Rotor (1) nach einem der vorangehenden Ansprüchen aufweist.

8. Kraftfahrzeug,
**dadurch gekennzeichnet,**
**dass** es eine elektrische Maschine (24) nach Anspruch 7 aufweist.

## Claims

1. Rotor for an electrical engine (24), with a rotor shaft (2) and a winding support (3) coupled to the rotor shaft (2) in a rotationally fixed manner, wherein the rotor (1) comprises at least one heat pipe (7, 19) running at an angle to the rotor shaft (2), wherein in a first alternative at least one winding (15) is arranged on the winding support (3) and the heat pipe (7) or at least one of the heat pipes (7) is guided along an axial end face of the winding support (3), or in a second alternative a squirrel cage (4) is arranged on the winding support (3), which is formed by several rods (5) short-circuited by short-circuit rings (6) on the end faces of the winding support (3), wherein an end (10) of the heat pipe (7) or of at least one of the heat pipes (7), said end facing away from the rotor shaft, is in contact with a short-circuit ring (6) directly or via a heat-conducting medium and/or is received in a recess (11) of a short-circuit ring (6), wherein both in the first and the second alternative, the rotor shaft (2) comprises a cavity (8) through which a cooling fluid can flow and/or comprises a further heat pipe (12) which extends at least in sections in the longitudinal direction of the rotor shaft (2), so that heat is dissipated axially via the rotor shaft (2),
wherein an end (9) of the heat pipe (7, 19) or of at least one of the heat pipes (7, 19), said end being on the rotor shaft side, is in contact with the further heat pipe (12) directly or via a heat-conducting medium and/or adjoins or projects into the cavity (8).

2. Rotor according to claim 1,
**characterised in that**
in the second alternative the heat pipe (7) or at least one of the heat pipes (7) is guided along an axial end face of the winding support (3).

3. Rotor according to claim 1 or 2,
**characterised in that**
the heat pipe (7, 19) extends in the radial direction of the rotor (1).

4. Rotor according to any one of the preceding claims,
**characterised in that**
the winding support (3) bears windings (15) designed as coils, wherein the winding heads (21) of the coils protrude beyond the winding support (3) in the axial direction of the rotor (1), wherein an end (10) of the heat pipe (7) or of at least one of the heat pipes (7), said end facing away from the rotor shaft, is arranged in the circumferential direction of the rotor (1) between the winding heads (21) of respectively two of the coils.

5. Rotor according to any one of the preceding claims,
**characterised in that**
the winding (15) or the squirrel cage (4) is guided at least in sections in at least one recess (20) of the winding support (3), wherein an end (22) of the heat pipe (19) or of at least one of the heat pipes (19), said end facing away from the rotor shaft, adjoins the recess (20) or projects into it.

6. Rotor according to any one of the preceding claims,
**characterised in that**
the heat pipe (19), at the end (22) facing away from the rotor shaft, widens in a first direction perpendicular to the longitudinal direction of the heat pipe (19) and/or narrows in a second direction perpendicular to the longitudinal direction and to the first direction.

7. Electrical engine with a stator (25),
**characterised in that**
the engine has a rotor (1) according to any one of the preceding claims.

8. Motor vehicle
**characterised in that**
the vehicle has an electrical engine (24) according to claim 7.

## Revendications

1. Rotor pour une machine électrique (24), avec un arbre de rotor (2) et un support d'enroulement (3) couplé à l'arbre de rotor (2) de manière solidaire en rotation, selon lequel le rotor (1) comprend au moins un caloduc (7, 19) s'étendant en formant un coude avec l'arbre du rotor (2), selon lequel, dans une première variante, au moins un enroulement (15) est disposé sur le support d'enroulement (3), et le caloduc (7) ou au moins un des caloducs (7) est dirigé le long d'une surface frontale axiale du support d'enroulement (3), ou, dans une seconde variante, une cage en court-circuit (4) est disposée sur le support d'enroulement (3), qui est formée par plusieurs tiges (5) court-circuitées par des bagues court-circuitées (6) sur les côtés frontaux du support d'enroulement (3), selon lequel une extrémité (10), opposée à l'arbre du rotor, du caloduc (7) ou d'au moins un des caloducs (7) est en contact directement ou par l'intermédiaire d'un moyen conducteur de la chaleur avec une bague court-circuitée (6) et/ou est logée dans un évidement (11) d'une bague court-circuitée (6), selon lequel non seulement dans la première variante, mais aussi dans la seconde variante, l'arbre de rotor (2) comprend une cavité (8) pouvant être traversée par un fluide de refroidissement et/ou un autre caloduc (12) qui s'étend au moins par sections dans la direction longitudinale de l'arbre de rotor (2), de façon que de la chaleur soit évacuée axialement par l'intermédiaire de l'arbre de rotor (2),
selon lequel une extrémité (9), du côté de l'arbre de rotor, du caloduc (7, 19) ou d'au moins un des caloducs (7, 19) est en contact directement ou par l'intermédiaire d'un moyen conducteur de la chaleur avec l'autre caloduc (12) et/ou confine à la cavité (8) ou pénètre dans celle-ci.

2. Rotor selon la revendication 1,
**caractérisé en ce**
**que**, dans la seconde variante, le caloduc (7) ou au moins un des caloducs (7) est dirigé le long d'une surface frontale axiale du support d'enroulement (3).

3. Rotor selon la revendication 1 ou 2,
**caractérisé en ce**
**que** le caloduc (7, 19) s'étend dans la direction radiale du rotor (1).

4. Rotor selon l'une des revendications précédentes,
**caractérisé en ce**
**que** le support d'enroulement (3) supporte des enroulements (15) configurés comme des bobines, selon lequel des têtes de bobine (21) des bobines débordent dans la direction axiale du rotor (1) au-dessus du support d'enroulement (3), selon lequel une extrémité (10), opposée à l'arbre de rotor, du caloduc (7) ou d'au moins un des caloducs (7) est disposée dans la direction circonférentielle du rotor (1) entre les têtes de bobines (21) de respectivement deux des bobines.

5. Rotor selon l'une des revendications précédentes,
**caractérisé en ce**
**que** l'enroulement (15) ou la cage en court-circuit (4) est dirigé(e) au moins par sections dans au moins un évidement (20) du support d'enroulement (3), selon lequel une extrémité (22), opposée à l'arbre de rotor, du caloduc (19) ou d'au moins un des caloducs (19) confine à l'évidement (20) ou pénètre dans celui-ci.

6. Rotor selon l'une des revendications précédentes,
**caractérisé en ce**
**que** le caloduc (19), à l'extrémité (22) opposée à l'arbre de rotor, s'évase dans une première direction perpendiculaire à la direction longitudinale du caloduc (19) et/ou se rétrécit dans une seconde direction perpendiculaire à la direction longitudinale et à la première direction.

7. Machine électrique avec un stator (25),
**caractérisée en ce**
**qu'**elle présente un rotor (1) selon l'une des revendications précédentes.

8. Véhicule automobile,
**caractérisé en ce**
**qu'**il présente une machine électrique (24) selon la revendication (7).
